Europäisches Patentamt

European Patent Office

Office européen des brevets

(11) Veröffentlichungsnummer: **0 264 521 B1**

# EUROPÄISCHE PATENTSCHRIFT

(45) Veröffentlichungstag der Patentschrift: **22.12.93**

(21) Anmeldenummer: **87102163.0**

(22) Anmeldetag: **16.02.87**

(51) Int. Cl.⁵: **G21F 1/04**, C04B 20/00, G21F 5/00

(54) **Doppelwandiger Transportbehälter für radioaktives Material.**

(30) Priorität: **18.10.86 DE 3635500**

(43) Veröffentlichungstag der Anmeldung:
**27.04.88 Patentblatt 88/17**

(45) Bekanntmachung des Hinweises auf die
Patenterteilung:
**22.12.93 Patentblatt 93/51**

(84) Benannte Vertragsstaaten:
**BE CH DE ES FR GB LI SE**

(56) Entgegenhaltungen:
**CH-A- 334 553**
**DE-A- 3 331 892**
**DE-B- 1 166 946**

**ATOMKERNENERGIE, Band 3, Nr. 3, März
1958, Seiten 101-108, Verlag Karl Thiemig
AG, München, DE; T. JAEGER: "Beton in der
Strahlenschutztechnik"**

**KERNENERGIE, Band 15, Nr. 1, Januar 1972,
Seiten 9-22, Akademie Verlag, Berlin, DE; W.
GERULLIS et al.: "Abschirmbeton im Kernkraftwerk Rheinsberg"**

**DIN 1045**

**DIN 1048**

(73) Patentinhaber: **Forschungszentrum Jülich
GmbH
Wilhelm-Johnen-Strasse
D-52425 Jülich(DE)**

(72) Erfinder: **Storch, Siegbert, Dr.
Fliederweg 10
D-5100 Aachen(DE)**
Erfinder: **Henning, Ernst
Leipziger Strasse 16
D-5142 Hückelhoven(DE)**
Erfinder: **Flatten, Hubert, Dr.
In der Mühlenau 12
D-510 Düren(DE)**

**Beschreibung**

Die Erfindung bezieht sich auf einen doppelwandigen Transportbehälter für radioaktives Material, das sich in Stahlkannen im Innenraum des Transportbehälters befindet. Im Hohlraum der Doppelwand ist Schwerbeton als Strahlenschutzmaterial eingebracht.

Transportbehälter für radioaktives Material, bei denen Beton zur Abschirmung der radioaktiven Strahlung verwandt wird, sind bekannt. So ist aus DE-GM 80 06 393 ein doppelwandiger Behälter bekannt, dessen Wand mit Beton verfüllt ist. In der Wand werden strahlenabsorbierende Materialien eingesetzt. Bekannt ist auch ein Transportbehälter, der im Hohlraum seiner Doppelwand Stahlbeton aufweist, damit vom Transportbehälter auch Stoßbelastungen aufgefangen werden können, DE-PS 33 31 892.

An die technischen Eigenschaften der Transportbehälter für radioaktives Material werden hohe Ansprüche gestellt, damit die erforderliche Abschirmwirkung beim Transport von radioaktiven Stoffen auch unter extremen Bedingungen erhalten bleibt. Daß Schwerbeton ganz allgemein zur Strahlenabschirmung geeignet ist, geht beispielsweise aus einer Veröffentlichung von Th. Jäger, "Beton in der Strahlenschutztechnik", Atomkernenergie, Band 3, Nr. 3, März 1985, S. 101 ff hervor. Bei Transportbehältern muß die Abschirmwirkung bei hohen Temperaturen sowie bei Frost und auch nach einer ggf. hohen mechanischen Beanspruchung des Transportbehälters beispielsweise bei einem Transportunfall gewährleistet sein. Für eine internationale Zulassung als Transportbehälter werden deshalb Prototypen der Behälter einem Feuertest und Frostbeanspruchungen bei -40 °C unterzogen. Auch Abstürze aus 9 m Höhe auf eine Kante des Behälterbodens und auf einen Dorn müssen die Transportbehälterprototypen überstehen, ohne dabei die erforderlichen Abschirmeigenschaften zu verlieren. Die meisten Transportbehälter werden deshalb aus Stahl oder Stahlguß gefertigt und sind aus diesem Grunde verhältnismäßig teuer. Eine Verwendung solcher Transportbehälter zugleich als Lagerbehälter zur Lagerung des radioaktiven Materials über einen längeren Zeitraum ist deshalb im allgemeinen nicht in Betracht zu ziehen. Hierfür sind Behälter aus Beton besser geeignet, insbesondere wenn es sich darum handelt, radioaktive Abfallstoffe zwischen- oder endzulagern. Die radioaktiven Abfallstoffe lassen sich dann am Entstehungsort in die Transportbehälter verfüllen, zum Lager transportieren und ohne erneutes Umsetzen zusammen mit den Transportbehältern in das Lager einbringen. Für den Transportbehälter für radioaktives Material gestellten Anforderungen in vollem Umfang erfüllen.

Aufgabe der Erfindung ist es, einen Schwerbeton für Transportbehälter für radioaktives Material zu schaffen, der eine hohe Temperaturbeständigkeit sowohl bei Belastungen durch Brand als auch bei Frost aufweist und der dem Transportbehälter unter Verhinderung von Spaltrissen im Beton eine ausreichende mechanische Festigkeit auch bei Stoßbeanspruchung verleiht. Dabei soll eine Bewehrung des Betons im Hohlraum der Behälterdoppelwand vermieden werden.

Diese Aufgabe der Erfindung wird für den eingangs angegebenen Transportbehälter durch die in Patentanspruch 1 genannten Merkmale des Schwerbetons gelöst. Danach ist der Schwerbeton durch folgende Kriterien gekennzeichnet:

a) Druckfestigkeit nach DIN 1048 nach 28 Tagen 40 bis 60 N/mm$^2$;

b) Betontrockenrohdichte mindestens 3500 kg/m$^3$,

c) der Mikroluftporengehalt beträgt 4 Vol.-% bis 7 Vol.-%;

d) pro m$^3$ Schwerbeton sind enthalten: 280 bis 370 kg Zement der Güteklasse Z 35 sowie 2800 bis 3400 kg Zuschlagstoffe,

e) der Wasser/Zement-Wert beträgt 0,40 bis 0,60;

f) das Ausbreitmaß für den Frischbeton nach DIN 1048 beträgt 40 bis 48 cm.

Darüberhinaus weist der Transportbehälter

g) einen Abschluß für den Hohlraum zur Verhinderung von Wasseraustritt nach Verfüllen mit Frischbeton unmittelbar nach Erstarrungsbeginn des Frischbetons auf.

Ein mit Schwerbeton gemäß der Erfindung verfüllter Transportbehälter weist eine hohe mechanische Festigkeit auch ohne zusätzliche Bewehrung des Betons auf. Die im Beton fein verteilten Mikroluftporen bilden einen ausreichenden Ausweichraum, in den bei Temperaturen über 100 °C entstehender Wasserdampf diffundieren kann. Eine Druckerhöhung im Beton und die sich daraus ergebende Gefahr der Zerstörung des inneren Betongefüges wird vermieden. Der von den Mikroluftporen geschaffene Ausweichraum dient zugleich zur Aufnahme von Eis, das sich bildet, wenn die Außentemperaturen unter 0 °C sinken. Für die Beanspruchbarkeit des erfindungsgemäßen Schwerbetons ist auch der niedere Wasser/Zement-Wert wesentlich, da dann der Anteil des Anmachwassers, der durch die Hydration des Zementes nicht gebunden wird, gering bleibt. Das Ausbilden von Spaltrissen im Beton wird durch Abschluß des Hohlraums nach Verfüllen mit Beton unmittelbar nach Erstarrungsbeginn verhindert. Es wird so ein Austrocknen und Schwinden im Schwerbeton und somit das Entstehen von Zwangsspannungen vermieden.

Bevorzugt werden für den Beton im Hohlraum des doppelwandigen Transportbehälters als Schwerzuschläge Baryt und Hämatit verwendet, Patentanspruch 2. Beide Zuschläge weisen eine ausreichende Kornfestigkeit und einen mit dem Zementstein verträglichen Wärmeausdehnungskoeffizienten auf. Es wird so für den Beton eine Temperaturbeständigkeit bis zu Temperaturen über 700 °C erreicht. Baryt ist darüber hinaus als strahlungsabschirmendes Material bekannt.

Um eine hohe Packungsdichte der Zuschläge zu erreichen, ist nach Patentanspruch 3 die Zuschlagzusammensetzung im günstigen Bereich der Sieblinien mit einem Gröstkorn von 16 mm nach DIN 1045 (Bild 2) einzustellen, wobei Baryt in der Korngruppe 0/4 in einer Menge zwischen 650 und 800 kg/m$^3$, Hämatit in der Korngruppe 0/6 in einer Menge im Bereich zwischen 700 und 900 kg/m$^3$ und Hämatit in der Korngruppe 6/20 in einer Menge im Bereich zwischen 1500 und 1700 kg/m$^3$ eingesetzt wird. Diese Zusammensetzung der Zuschläge führt zusammen mit dem vorgenannten Zementanteil und unter Einhaltung des Wasser/Zement-Wertes, zu einer geringen Verformbarkeit und somit hohen Beanspruchbarkeit des Schwerbetons auch bei Stoßbelastungen. Als Zement wird bevorzugt Hochofenzement der Güteklasse HOZ 35 L verwendet, Patentanspruch 4. Dieser Zement weist eine langsame Hydratationswärmeentwicklung auf und trägt somit zur Vermeidung von Rißbildungen im Schwerbeton bei.

Der Frischbeton wird im Hohlraum der Doppelwand verdichtet, Patentanspruch 5.

Die Erfindung wird nachfolgend anhand eines Ausführungsbeispiels näher beschrieben. Der Transport- und Lagerbehälter war als doppelwandiger zylindrischer Stahlbehälter ausgeführt. Der mit Schwerbeton auszufüllende Zwischenraum zwischen den Stahlwänden war 30 cm breit. Die Zeichnung zeigt im einzelnen:

Fig. 1    doppelwandiger Transport- und Lagerbehälter, dessen Doppelwand mit Schwerbeton verfüllt ist;

Fig. 2    Sieblinie der Zuschläge nach DIN 1045.

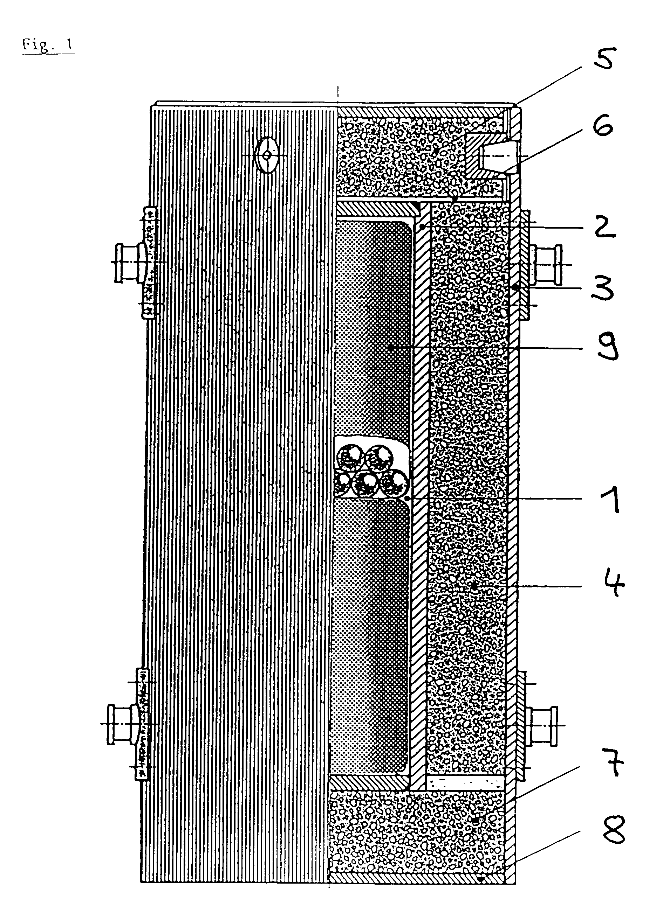

In Fig. 1 ist schematisch ein doppelwandiger Transport- und Lagerbehälter dargestellt. Ein Innenraum 1 des Behälters ist von einer Doppelwand umgeben, deren Innenwand 2 und Außenwand 3 einen Hohlraum 4 aufweisen, der mit Schwerbeton verfüllt ist.

Der Hohlraum 4 ist im Ausführungsbeispiel zum Deckel 5 des Tranportbehälters hin mit einer die Innenwand 2 und Außenwand 3 abstützenden Deckelauflage 6 verschlossen, der Bodenraum 7 ist mit einer Bodenplatte 8 abgedeckt.

Im Innenraum 1 des Transport- und Lagerbehälters sind gasdicht verschweißte Stahlkannen 9 untergebracht, in denen sich das zu transportierende radioaktive Material befindet. Der den Innenraum 1 verschließende Deckel 5 ist im Ausführungsbeispiel ebenfalls doppelwandig ausgeführt und mit Schwerbeton verfüllt. Nach Einbringen der Stahlkannen 9 und Aufsetzen des Deckels 5 ist der Transportbehälter durch Verschweißen des Deckels an der Außenwand 3 verschließbar.

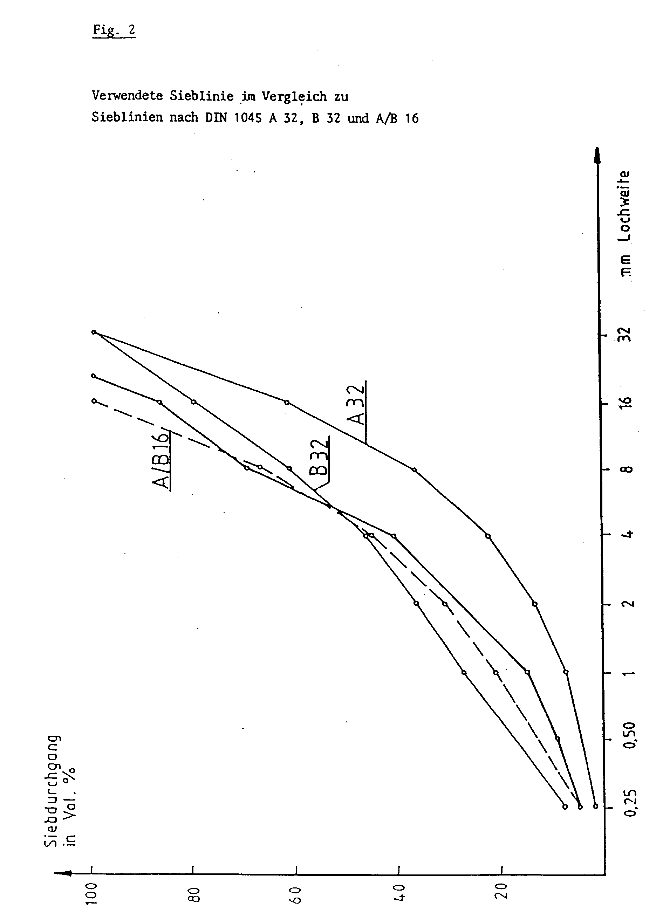

Für den Schwerbeton zur Verfüllung des Hohlraums 4 des Transport- und Lagerbehälters wird als Bindemittel Zement HOZ 35 L verwendet, der bei ausreichender Druckfestigkeit eine langsame Hydratationswärmeentwicklung aufweist. Als Zuschläge wurden Baryt in der Lieferkorngruppe 0/4 mm und Hämatit in der Lieferkorngruppe 0/6 mm sowie 6/20 mm verwendet. Um die erfindungsgemäße Zuschlagszusammensetzung zu gewährleisten, werden die gelieferten Schwerzuschläge noch naß abgesiebt. Die Zuschlagzusammensetzung wurde nach DIN 1045 auf den günstigen Bereich der Sieblinien mit ienem Gröstkorn von 16 mm eingestellt. Es wurden Baryt 0/4 mit 712 kg/m$^3$, Hämatit 0/6 mit 812 kg/m$^3$ und Hämatit 6/20 mit 1641 kg/m$^3$ eingesetzt. Die erreichte Sieblinie S ist Fig. 2 entnehmbar. Im dargestellten Siebliniendiagramm ist auf der Abszisse die Lochweite des verwendeten Siebes in mm, auf der Ordinate der Siebdurchgang in Vol.-% angegeben. Eingetragen sind in Fig. 2 neben der Sieblinie S für die Zusammensetzung der erfindungsgemäß gewählten Zuschläge die Sieblinien A 32, B 32 und A/B 16 nach DIN 1045, Blatt 2. Die Sieblinie S liegt im günstigen Bereich der Sieblinien mit einem Gröstkorn von 16 mm.

Für den Frischbeton wurden den Zuschlägen 340 kg/m$^3$ Zement HOZ 35 L und 153 kg/m$^3$ Wasser zugegeben. Der Wasser/Zement-Wert lag somit im Bereich w/z = 0,45. Um die gewünschte Konsistenz des Frischbetons mit einem Ausbreitmaß nach DIN 1048 mit 40 bis 48 cm zu erreichen, wurden dem Beton zum Einfüllen in den Hohlraum des Transportbehälters 10 kg/m$^3$ Fließmittel zugesetzt. Zur Mikroluftporenbildung wurden zusätzlich 0,34 kg/m$^3$ Luftporenbildner hinzugefügt. Die Dosierung der Zusatzmittel wird entsprechend der erfindungsgemäß vorgegebenen Betonmerkmale eingestellt.

Nach Vermischen aller Anteile betrug die Frischbetonrohdichte im Mittel 3630 kg/m$^3$ (gemessen in einem 8 Liter-Gefäß). Die Frischbetonrohdichte muß mindestens 3600 kg/m$^3$ betragen, damit die notwendige Mindesttrockenrohdichte von 3500 kg/m$^3$ erreicht wird. Als Konsistenz des Betons wurde nach DIN 1048 ein Ausbreitmaß von 43 cm gemessen.

Nach Einbringen des Schwerbetons in den Zwischenraum der Doppelwand wurde der Beton durch Stochern und leichtes Stampfen verdichtet. Entmischungserscheinungen wurden dabei nicht beobachtet.

Der Frischbeton wies ein gutes Zusammenhaltevermögen auf. Verdichtungsporen konnten weitgehend vermieden werden.

Die Zusammensetzung des Betons mit verhältnismäßig geringem Zementgehalt minimiert die Gefahr einer Spaltrißbildung. Die entstehende Hydratationswärme wird weitgehend durch Aufheizung der Schwerzuschläge und der Stahlwände des Transportbehälters verbraucht. Über die Stahlwände findet darüber hinaus eine rasche Wärmeableitung an die Umgebung statt. Insgesamt erwärmt sich daher der Beton während der Hydratation nur mäßig.

Wesentlich für das Verhindern von Spaltrissen im Beton ist aber auch das Verschließen des Hohlraums, in den der Beton verfüllt wird nach Erstarrungsbeginn. Im Ausführungsbeispiel wird die Doppelwand des Transportbehälters vom Boden aus mit Frischbeton verfüllt und durch Aufsetzen der Bodenplatte verschlossen. Die Bodenplatte wird mit den Stahlwänden verschweißt. Durch dieses Verschließen des Schwerbetons im Hohlraum der Doppelwand nach dessen Verdichtung und bei Beginn der ersten Erstarrung wird das Verdunsten von Wasser verhindert und damit ein Schwinden des Betons durch Austrocknen vermieden. Eine Spaltrißbildung ist somit unterbunden.

Zur Prüfung der erreichten Betonqualität waren beim Herstellen des Transportbehälters Probewürfel mit 15 cm Kantenlänge ausgebildet worden. Die Druckfestigkeit wurde nach DIN 1048 geprüft und betrug nach 9 Tagen 35,6 N/mm³, nach 28 Tagen 49 N/mm³ jeweils als Mittelwert von drei Einzelprüfungen.

Eine Analyse des abgebundenen Schwerbetons ergab folgende Zusammensetzung:

| Baustoff | Massen-anteil kg/m³ | Dichte kg/m³ | Volumen-anteil dm³/m³ |
|---|---|---|---|
| Zement | 337 | 3,00 | 112 |
| Baryt 0/4 | 705 | 4,13 | 171 |
| Hämatit 0/6 | 804 | 4,71 | 171 |
| Hämatit 6/20 | 1625 | 4,76 | 341 |
| Wasser | 152 | 1,00 | 152 |
| Luftporenbildner | 0,33 | 1,00 | --- |
| Fließmittel | 9,9 | 1,00 | 10 |
| Luftporengehalt | --- | --- | 43 |
| Summe | 3633 | | 1000 |

Der mit Beton verfüllte Transport- und Lagerbehälter wurde den für die Zulassung von Transportbehältern vorgeschriebenen Tests unterworfen. Er überstand die Prüfungen ohne Beanstandungen. Die Verbundwirkung zwischen den Stahlwänden und dem Beton blieb auch bei extremen Temperaturbelastungen erhalten, was auch für den Korrossionsschutz der Stahlwände des Behälters von Bedeutung ist. Die Matrixzugfestigkeit im Zement ist geringer als die Zugfestigkeit der Zuschläge. Diese unterschiedlichen Festigkeiten werden bei einem Temperaturanstieg im Beton noch verstärkt, da im Zementstein in Folge Dehydratation bei steigender Temperatur ein Festigkeitsabfall eintritt. Die vorhandenen Festigkeitsdifferenzen zwischen Zementstein und Zuschlägen bewirken, daß insbesondere im Randbereich zwischen Zementstein und Zuschlagkörnern bei einer Beanspruchung keine glatten Spaltrisse, sondern ungerichtete, zufällig verlaufende Risse, also Risse mit rauher Bruchoberfläche auftreten. Solche Risse vrmindern die gewünschte Abschirmwirkung auch nach extremer Beanspruchung des Transportbehälters nicht. Dies gilt nicht nur für thermische Beanspruchungen, sondern auch für mechanische. Nach Abwurf eines Prototypbehälters aus 9 m Höhe blieb die erforderliche Abschirmwirkung voll erhalten.

**Patentansprüche**

1. Doppelwandiger Transportbehälter für radioaktives Material, das sich in Stahlkannen im Innenraum des Transportbehälters befindet, wobei im Hohlraum der Doppelwand Schwerbeton als Strahlenschutzmaterial eingebracht ist,
**dadurch gekennzeichnet,**
daß

a) die Druckfestigkeit des Schwerbetons nach DIN 1048 nach 28 Tagen zwischen 40 bis 60 N/mm$^2$ beträgt,

b) die Betontrockenrohdichte mindestens 3500 kg/m$^3$,

c) der Mikroluftporengehalt 4 bis 7 Vol% beträgt,

d) pro m$^3$ Schwerbeton 280 bis 370 kg Zement der Güteklasse Z 35 und 2800 bis 3400 kg Zuschlagsstoffe enthalten sind,

e) der Wasser/Zement-Wert 0,40 bis 0,60 beträgt,

f) das Ausbreitmaß für den Frischbeton nach DIN 1048 40 bis 48 cm beträgt,

g) ein Abschluß für den Hohlraum zur Verhinderung von Wasseraustritt nach Verfüllen mit Frischbeton unmittelbar nach Erstarrungsbeginn des Frischbetons vorgesehen ist.

2. Tansportbehälter nach Anspruch 1,
**dadurch gekennzeichnet,**
daß als Schwerzuschläge Baryt und Hämatit verwendet werden.

3. Transportbehälter nach Anspruch 2,
**dadurch gekennzeichnet,**
daß die Schwerzuschläge im günstigen Bereich der Sieblinien mit einem Gröstkorn von 16 mm nach DIN 1045 liegen, wobei Baryt in der Korngruppe 0/4 in einer Menge zwischen 650 und 800 kg/m$^3$, Hämatit in der Korngruppe 0/6 in einer Menge zwischen 700 und 900 kg/m$^3$ und Hämatit in der Korngruppe 6/20 in einer Menge zwischen 1500 und 1700 kg/m$^3$ eingesetzt ist.

4. Transportbehälter nach einem der Patentansprüche 1, 2 oder 3,
**dadurch gekennzeichnet,**
daß als Zement HOZ 35 L verwendet wird.

5. Transportbehälter nach einem der vorhergehenden Patentansprüche 1 bis 4,
**dadurch gekennzeichnet,**
daß der Frischbeton im Hohlraum der Doppelwand verdichtet wird.

**Claims**

1. Double-walled transport container for radioactive material held in steel pots in the interior of the transport container, high-density concrete having been placed in the cavity of the double wall to act as radiation-shielding material,
characterised in that

a) the compressive strength of the high-density concrete to DIN 1048 is between 40 and 60 N/mm$^2$ after 28 days,

b) the concrete's dry bulk density is not less than 3500 kg/m$^3$,

c) the microscopic air pore content is 4 to 7 vol. %,

d) each cubic metre of high-density concrete contains 280 to 370 kg of Z35 grade cement and 2800 to 3400 kg of aggregates,

e) the water/cement ratio is 0.40 to 0.60,

f) the slump in respect of the unset concrete to DIN 1048 is 40 to 48 cm,

g) a cavity seal to prevent water from escaping once the cavity has been filled with unset concrete is provided immediately the concrete begins to set.

2. Transport container according to claim 1,
characterised in that barite and haematite are used as heavy aggregates.

3. Transport container according to claim 2,
characterised in that the heavy aggregates are within the favoured range of the particle-size distribution curves with a maximum particle size of 16 mm to DIN 1045, using barite from particle category 0/4 in an amount between 650 and 800 kg/m$^3$, haematite from particle category 0/6 in an amount between 700 and 900 kg/m$^3$ and haematite from particle category 6/20 in an amount between 1500 and 1700 kg/m$^3$.

4. Transport container according to any of claims 1, 2 or 3,
characterised in that HOZ 35 L is the cement used.

5. Transport container according to any of the preceding claims 1 to 4,
characterised in that the unset concrete is compacted in the cavity of the double wall.

**Revendications**

1. Récipient de transport à double paroi pour des matières radioactives qui se trouvent dans des fûts en acier à l'intérieur du récipient, du béton lourd étant introduit comme matériau de protection contre le rayonnement dans l'espace creux de la double paroi,
**caractérisé** en ce que
a) la résistance à l'écrasement du béton lourd selon DIN 1048 est comprise entre 40 et 60 N/mm$^2$ au bout de 28 jours,
b) le poids volumique apparent du béton sec est d'au moins 3500 kg/m$^3$,
c) la teneur en micropores est de 4 à 7 % en volume,
d) le béton lourd contient, par m$^3$, 280 à 470 kg de ciment de classe de qualité Z 35 et 2800 à 3400 kg de granulats,
e) le rapport E/C (eau/ciment) est de 0,40 à 0,60,
f) le coefficient d'expansion du béton frais selon DIN 1048 est de 40 à 48 cm,
g) il est prévu, dès le début de la solidification du béton frais, une obturation de l'espace creux afin d'empêcher l'échappement d'eau à la suite du remplissage du béton frais.

2. Récipient de transport selon la revendication 1, **caractérisé** en ce qu'on utilise comme granulats lourds de la baryte et de l'hématite.

3. Récipient de transport selon la revendication 2, **caractérisé** en ce que les granulats lourds se situent dans la plage favorable des courbes granulométriques avec une taille de grain maximale de 16 mm selon DIN 1045, en utilisant de la baryte de catégorie granulométrique 0/4 dans une proportion comprise entre 650 et 800 kg/m$^3$, de l'hématite de catégorie granulométrique 0/6 dans une proportion comprise entre 700 et 900 kg/m$^3$, et de l'hématite de catégorie granulométrique 6/20 dans une proportion comprise entre 1500 et 1700 kg/m$^3$.

4. Récipient de transport selon l'une quelconque des revendications 1 à 3, **caractérisé** en ce qu'on utilise comme ciment du ciment de haut-fourneau 35 L.

5. Récipient de transport selon l'une quelconque des revendications 1 à 4, **caractérisé** en ce que le béton frais est tassé dans l'espace creux de la double paroi.

Fig. 1

Fig. 2

Verwendete Sieblinie im Vergleich zu
Sieblinien nach DIN 1045 A 32, B 32 und A/B 16